(19) Europäisches Patentamt
European Patent Office
Office européen des brevets

(11) **EP 4 231 378 A1**

(12) **EUROPEAN PATENT APPLICATION**

(43) Date of publication:
**23.08.2023 Bulletin 2023/34**

(21) Application number: **23157468.2**

(22) Date of filing: **20.02.2023**

(51) International Patent Classification (IPC):
$H01M\ 4/133^{(2010.01)}$    $H01M\ 4/134^{(2010.01)}$
$H01M\ 4/1393^{(2010.01)}$    $H01M\ 4/1395^{(2010.01)}$
$H01M\ 4/36^{(2006.01)}$    $H01M\ 4/583^{(2010.01)}$
$H01M\ 10/0525^{(2010.01)}$    $H01M\ 4/587^{(2010.01)}$
$H01M\ 4/02^{(2006.01)}$

(52) Cooperative Patent Classification (CPC):
H01M 4/133; H01M 4/134; H01M 4/1393;
H01M 4/1395; H01M 4/364; H01M 4/366;
H01M 4/587; H01M 10/0525; H01M 2004/021;
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.02.2022 KR 20220022511**

(71) Applicant: **SK On Co., Ltd.**
**Seoul 03161 (KR)**

(72) Inventors:
• **JANG, Hyun Joong**
**34124 Daejeon (KR)**
• **KIM, Jae Ram**
**34124 Daejeon (KR)**
• **LEE, Yong Seok**
**34124 Daejeon (KR)**

(74) Representative: **Bird & Bird LLP**
**Maximiliansplatz 22**
**80333 München (DE)**

(54) **ANODE AND SECONDARY BATTERY INCLUDING THE SAME**

(57) An anode for a secondary battery includes a first anode mixture layer disposed on an anode current collector and a second anode mixture layer disposed on a surface of the anode, wherein the first and second anode mixture layers include a graphite-based anode active material of graphite secondary particles, at least the second anode mixture layer includes a graphite-based anode active material of graphite primary particles, and a content [A2] of graphite primary particles included in the second anode mixture layer is greater than a content [A1] of graphite primary particles included in the first anode mixture layer.

EP 4 231 378 A1

**Description**

**BACKGROUND**

**1. FIELD**

The present disclosure relates to an anode and a secondary battery including the anode.

**2. DESCRIPTION OF RELATED ART**

Anodes are manufactured by applying an anode slurry, including an anode active material, to an anode current collector, drying the anode slurry, and then rolling a resultant structure with a rolling roll. An electrode surface of such an anode is flattened during a rolling process using the rolling roll. However, with the flattening of the electrode surface, pores of the electrode may be reduced.

The pores in the electrode are provided as a movement path through which lithium ions move during a charging and discharging process of the electrode. As the pores in the electrode decrease during the rolling process, the movement path of lithium ions may decrease, resistance may increase, and a fast charging rate may deteriorate, thereby degrading battery performance.

In general, graphite used as an anode active material includes primary particles and secondary particles in which the primary particles are aggregated. Compared to the primary particles, a degree of deformation of the secondary particles due to pressure applied in the rolling process is high. Therefore, when graphite of secondary particles is used as an anode active material, the deformation of the particles is high during the rolling process so that a reduction in the pores of the electrode surface is significant, and as a result, the movement path of lithium ions may be further reduced.

**SUMMARY**

An aspect of the present disclosure may provide an anode having improved distribution characteristics of an anode active material.

An aspect of the present disclosure may also improve distribution characteristics of an anode active material, thereby suppressing a reduction of pores on a surface of an anode occurring during a rolling process.

An aspect of the present disclosure may also provide an anode having improved fast charging characteristics by reducing resistance in the anode during a charging-discharging process by improving a movement path of lithium ions.

According to an aspect of the present disclosure, an anode for a secondary battery includes a first anode mixture layer disposed on an anode current collector and a second anode mixture layer disposed on a surface of the anode, wherein the first and second anode mixture layers include a graphite-based anode active material of graphite secondary particles, at least the second anode mixture layer includes a graphite-based anode active material of graphite primary particles, and a content [A2] of graphite primary particles included in the second anode mixture layer is greater than a content [A1] of graphite primary particles included in the first anode mixture layer.

The [A1] and [A2] may satisfy Equation 1 below:

$$[A2] \geq 2\,[A1] \qquad \text{(Equation 1)}$$

(In Equation 1 above, $A1 \geq 0$ and $A2 > 0$).

The content of the graphite primary particles included in the first anode mixture layer may be 0 wt% or more and 50 wt% or less, and the content of the graphite primary particles included in the second anode mixture layer may be 10 wt% or more and 95 wt% or less.

The graphite primary particles may have a particle diameter of D50 of 3 to 25 $\mu$m.

A content [B1] of graphite secondary particles included in the first anode mixture layer and a content [B2] of graphite secondary particles included in the second anode mixture layer may satisfy Equation 2:

$$[B1] > [B2] \qquad \text{(Equation 2)}$$

(In Equation 2 above, $B2 > 0$).

A content of the graphite secondary particles included in the first anode mixture layer may be 20 wt% or more and 97 wt% or less, and a content of the graphite secondary particles included in the second anode mixture layer may be greater than 0 wt% and 85 wt% or less.

The graphite secondary particles may have D50 of 10 to 25 μm.

The anode may include 20 to 75 wt% of graphite primary particles and 20 to 75 wt% of graphite secondary particles based on a total weight of the anode mixture layer.

The anode may further include: a silicon-based anode active material.

The silicon-based anode active material may include 1 to 30 wt% based on a total weight of the anode mixture layer.

The second anode mixture layer may further include a silicon-based anode active material, and a content [C1] of the silicon-based anode active material included in the first anode mixture layer and a content [C2] of the silicon-based anode active material included in the second anode mixture layer may satisfy Equation 3 below:

$$[C2] \geq 2\,[C1] \qquad \text{(Equation 3)}$$

(In Equation 3 above, $[C1] \geq 0$, and $[C2] > 0$.)

The anode may include 94 to 95 wt% of an anode active material, 0.1 to 3 wt% of a conductive agent, and 1.5 to 3 wt% of a binder.

The second anode mixture layer may have a thickness greater than 20% and less than or equal to 50% of a total thickness of the anode mixture layer.

The first anode mixture layer may have a thickness of 50% or more and less than 80% of a total thickness of the anode mixture layer.

The first anode mixture layer and the second anode mixture layer may have a thickness ratio of 5 to 8:2 to 5.

According to another aspect of the present disclosure, a secondary battery includes an electrode assembly in which the anode described above and a cathode including a cathode mixture layer on at least one surface of a cathode current collector are alternately laminated with a separator as a boundary; and a battery case in which the electrode assembly is accommodated and sealed.

## DETAILED DESCRIPTION

Exemplary embodiments in the present disclosure will now be described in detail with reference to the accompanying drawings.

As an exemplary embodiment, the present disclosure provides an anode having improved distribution characteristics of an anode active material.

According to an exemplary embodiment in the present disclosure, there is provided a multilayer anode including two or more anode mixture layers, in which the multilayer anode includes at least a first anode mixture layer disposed on an anode current collector and a second anode mixture layer disposed on a surface of the anode, and the first anode mixture layer and the second anode mixture layer include a graphite-based anode active material as an anode active material.

The graphite-based anode active material may include graphite primary particles and graphite secondary particles in which the graphite primary particles are aggregated, and according to an exemplary embodiment in the present disclosure, an anode in which a distribution of the graphite primary particles and the graphite secondary particles is controlled in a thickness direction toward the surface of the anode on the anode current collector is provided. In manufacturing the anode, an anode mixture slurry including an anode active material is applied to a surface of the anode current collector and dried, and then a rolling process is performed thereon. The surface of the anode mixture layer is flattened by a rolling roll. During the rolling process using such a rolling roll, the porosity at the surface of the anode is reduced compared to the inside of the anode mixture layer, that is, near the anode current collector side.

In order to suppress the porosity reduction phenomenon caused by the rolling process as described above, as an exemplary embodiment, a large number of graphite primary particles having a smaller strain than that of graphite secondary particles are configured in an upper layer of an electrode to reduce the reduction in the porosity.

As described above, by adjusting a distribution of each of the graphite-based anode active materials in a thickness direction of the anode mixture layer, while using the graphite primary particles and the graphite secondary particles as anode active materials, the reduction in porosity due to pore collapse on the surface of the anode mixture layer due to the rolling roll during the rolling process may be suppressed, and battery performance, such as resistance in the anode and fast charging characteristics, may be improved.

Specifically, the anode may include a graphite-based anode active material of graphite secondary particles in the first and second anode mixture layers, at least the second anode mixture layer may include a graphite-based anode active material of graphite primary particles, and the content [A2] of the graphite primary particles included in the second anode mixture layer may be greater than the content [A1] of the graphite primary particles included in the first anode mixture layer.

The graphite primary particles have a smaller strain than the secondary particles in which the graphite primary particles are agglomerated. Therefore, when a large amount of the graphite primary particles are disposed on the surface of the anode, the reduction in porosity on the surface of the anode may be suppressed although the graphite primary particles are pressed by the rolling roll during the rolling process.

If the content of graphite primary particles included in the second anode mixture layer is greater than the content of graphite primary particles included in the first anode mixture layer, a specific content of graphite primary particles included in each mixture layer is not particularly limited, and the first anode mixture layer may not include the graphite primary particles.

More specifically, the content [A1] of the graphite primary particles included in the first anode mixture layer and the content [A2] of the graphite primary particles included in the second anode mixture layer may satisfy Equation 1 below.

$$[A2] \geq 2 [A1] \qquad \text{(Equation 1)}$$

In the Equation 1, $[A1] \geq 0$, and $[A2] > 0$.

That is, based on a total weight of the second anode mixture layer, the content [A2] of the graphite primary particles included in the second anode mixture layer may be twice or more than twice the content [A1] of the graphite primary particles included in the first anode mixture layer based on the total weight of the first anode mixture layer.

For example, the first anode mixture layer may include the graphite primary particles in an amount of 0 wt% or more and 50 wt% or less with respect to the total weight of the first anode mixture layer. Specifically, the first anode mixture layer may include 5 wt% or more, 7 wt% or more, 10 wt% or more, 12 wt% or more, or 15 wt% or more, and 50 wt% or less, 45 wt% or less, 40 wt% or less, 35 wt% or less, 30 wt% or less, or 25 wt% or less of the graphite primary particles.

In this case, the second anode mixture layer may include graphite primary particles in an amount satisfying Equation 1 within a range of 10 wt% or more and 95 wt% or less based on the total weight of the second anode mixture layer.

The graphite primary particles may have a D50 of, but not limited to, 3 $\mu$m or more, for example, 4 $\mu$m or more, 5 $\mu$m or more, 6 $\mu$m or more, or 7 $\mu$m or more, and 25 $\mu$m or less, for example, 23 $\mu$m or less, 20 $\mu$m or less, 17 $\mu$m or less, or 15 $\mu$m or less.

As another exemplary embodiment, the content [B1] of the graphite secondary particles included in the first anode mixture layer and the content [B2] of the graphite secondary particles included in the second anode mixture layer may satisfy Equation 2 below.

$$[B1] > [B2] \qquad \text{(Equation 2)}$$

In Equation 2 above, $B2 > 0$.

For example, the content of the graphite secondary particles included in the first anode mixture layer may be, for example, 20 wt% or more and 97 wt% or less based on the total weight of the first anode mixture layer. Specifically, the content of the graphite secondary particles in the first anode mixture layer may be 20 wt% or more, 25 wt% or more, 30 wt% or more, 35 wt% or more, 40 wt% or more, 45 wt% or more, 50 wt% or more and may be 97 wt% or less, 95 wt% or less, 90 wt% or less, 85 wt% or less, 80 wt% or less, and 75 wt% or less. At this time, the content of the graphite secondary particles included in the second anode mixture layer may be included in an amount satisfying Equation 2 above within a range of 0 wt% or more and 85 wt% or less based on the total weight of the second anode mixture layer.

The graphite secondary particles that is commonly used as an anode active material of a lithium secondary battery may be used in the present disclosure, but is not limited thereto, and the graphite secondary particles may have a particle size of D50 of 10 $\mu$m or more, for example, 11 $\mu$m or more, 12 $\mu$m or more, 13 $\mu$m or more, and may have a particle size of D50 of 25 $\mu$m or less, for example, 23 $\mu$m or less, 20 $\mu$m or less, 18 $\mu$m or less, 17 $\mu$m or less, or 15 $\mu$m or less.

In the anode including the first anode mixture layer and the second anode mixture layer, the graphite primary particles may be included in an amount of 20 to 75 wt%, for example, 25 wt% or more, 30 wt% or more, 35 wt% or more, 40 wt% or more, and may be 70 wt% or less, 65 wt% or less, 60 wt% or less, or 55 wt% or less with respect to the total weight of the anode mixture layer. In addition, the graphite secondary particles may be included in an amount of 20 to 75 wt%, for example, 25 wt% or more, 30 wt% or more, 35 wt% or more, 40 wt% or more, and may be 70 wt% or less, 65 wt% or less, 60 wt% or less, and 55 wt% or less.

The graphite-based anode active material may be artificial graphite, natural graphite, or a mixture of artificial graphite and natural graphite. A crystalline carbon-based active material, such as artificial graphite or a mixture of artificial graphite and natural graphite has more developed crystallographic characteristics than an amorphous carbon-based active material. Therefore, when such a crystalline carbon-based active material is used as an anode active material, orientation characteristics of a carbon material in the anode mixture layer may be further improved by application of an external magnetic field.

More specifically, the graphite-based anode active material may be artificial graphite or natural graphite, and a shape thereof may be amorphous, plate-like, flake-like, spherical, fibrous, or a combination thereof. In addition, in the case of the artificial graphite and natural graphite, a mixing ratio may be 70:30 to 95:5 by weight.

As an example for an exemplary embodiment in the present disclosure, in the anode including a first anode mixture layer and a second anode mixture layer, the first anode mixture layer and the second anode mixture layer may include graphite primary particles and graphite secondary particles as an anode active material, and may further include other anode active materials, such as silicon-based anode active materials, if necessary.

Specifically, the anode mixture layer may further include a silicon-based anode active material. In the case of including the silicon-based anode active material, the silicon-based anode active material may be included in an amount of 1 to 30 wt%, for example, 1 wt% or more, 2 wt% or more, or 3 wt% or more, may be included in an amount of 30 wt% or less, 25 wt% or less, 20 wt% or less, 15 wt% or less, based on the total weight of the anode mixture layer. In addition, the graphite secondary particles and the silicon-based anode active material may have the same content in the first anode mixture layer and the second anode mixture layer, and in this case, the content of the graphite primary particles in the second anode mixture layer may be greater than that in the first anode mixture layer.

The silicon-based anode active material has higher theoretical capacity than the graphite-based anode active material, and when the silicon-based anode active material is included in the anode mixture layer, resistance of the anode may be reduced. However, the silicon-based anode active material has a large volume expansion in the process of repeating the insertion and release of lithium ions in the charging and discharging process of the battery, and thus, it may be removed from the electrode current collector. Therefore, when the anode mixture layer includes the silicon-based anode active material, it is preferable to control a distribution of the silicon-based anode active material.

The silicon-based anode active material may be included only in the second anode mixture layer, and may be included in the first anode mixture layer and the second anode mixture layer. Specifically, the silicon-based anode active material may be included in a larger amount in the second anode mixture layer than in the first anode mixture layer.

As an exemplary embodiment, when at least the second anode mixture layer further includes a silicon-based anode active material, the content [C1] of the silicon-based anode active material included in the first anode mixture layer and the content [C2] of the silicon-based anode included in the second anode mixture layer may satisfy Equation 3 below.

$$[C2] \geq 2\,[C1] \qquad \text{(Equation 3)}$$

In Equation 3 above, $[C1] \geq 0$, and $[C2] > 0$.

That is, based on the total weight of the second anode mixture layer, the content [C2] of the silicon-based anode active material included in the second anode mixture layer may be twice the content [C1] of the silicon-based anode active material included in the first anode mixture layer or greater than twice, based on the total weight of the first anode mixture layer.

For example, the silicon-based anode active material included in the first anode mixture layer may be 0 wt% or more, 0.5 wt% or more, 1 wt% or more, or 1.5 wt% or more, 2 wt% or more, or 3 wt% or more, and may be 10 wt% or less, 7 wt% or less, or 5 wt% or less, based on the total amount of anode active materials included in the first anode mixture layer. At this time, the content of the silicon-based anode active material included in the second anode mixture layer may be included in an amount satisfying Equation 3 within the range of 3 to 30 wt% of the content of the silicon-based anode active material in the entire anode mixture layer, and is not particularly limited.

The silicon-based anode active material may be Si, a Si-C composite, SiOx (0<x<2), or a Si-Q alloy. In the Si-Q alloy, Q may be an element selected from the group consisting of alkali metals, alkaline earth metals, group 13 elements, group 14 elements, group 15 elements, group 16 elements, transition metals, rare earth elements, and combinations thereof other than Si, and, specifically, may be selected, from the group consisting of, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

Meanwhile, the second anode mixture layer may have a thickness greater than 20% and equal to or less than 50% of the total thickness of the anode mixture layer, and the first anode mixture layer may have a thickness equal to or greater than 50% and less than 80%. Furthermore, the first anode mixture layer and the second anode mixture layer may have a thickness ratio of 5 to 8:2 to 5.

Furthermore, the anode may further include a third anode active material in addition to the graphite-based anode active material and the silicon-based anode active material.

The third anode active material may further include, for example, at least one of a tin(Sn)-based anode active material and a lithium vanadium oxide anode active material. When the third anode active material is further included as the anode active material, the third anode active material may be included in an amount of 1 to 50 wt% based on the total weight of the anode active material.

The Sn-based anode active material may be Sn, SnOz, or Sn-R alloy. In the Sn-R alloy, R may be an element selected from the group consisting of alkali metals, alkaline earth metals, group 13 elements, group 14 elements, group 15 elements, group 16 elements, transition metals, rare earth elements, and combinations thereof other than Sn and Si, and , specifically, may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, In, Tl, Ge, P, As, Sb, Bi, S, Se, Te, Po, and combinations thereof. In addition, at least one of these and SiOz may be mixed and used.

The content of the anode active material in the entire anode mixture layer may be 94 to 98 wt% based on the total weight of the anode mixture layer. In addition, the anode is not particularly limited, but may include 70 to 95 wt% of the graphite-based anode active material and 1 to 30 wt% of the silicon-based anode active material based on the total weight of the anode active materials included in the anode mixture layer.

The anode mixture layer may include a conductive agent and a binder in addition to the anode active material, and may further include an additive, such as a thickener, if necessary.

The conductive agent is used to impart conductivity to the electrode, and a conductive agent commonly used in secondary batteries may be used without limitations. For example, carbon-based materials, such as natural graphite, artificial graphite, carbon black, acetylene black, ketjen black, carbon fiber, carbon nanotubes; metal-based materials, such as metal powders or metal fibers, such as copper, nickel, aluminum, and silver; conductive polymers, such as polyphenylene derivatives; or a conductive material including a mixture thereof may be used.

The content of the conductive agent may be 0.1 to 3 wt% based on the total weight of the anode mixture layer.

The anode mixture layer may include a binder. The binder serves to bind the anode active material particles to each other and to bind the anode active material to the anode current collector. As the binder, an aqueous binder may be used, but is not limited thereto.

The aqueous binder may include, for example, styrene-butadiene rubber, acrylated styrene-butadiene rubber(SBR), acrylonitrile-butadiene rubber, acrylic rubber, butyl rubber, ethylene-propylene copolymer, polyepichlorohydrin, polyphosphazene, polyacrylonitrile, polystyrene, ethylene-propylene-diene copolymer, polyvinylpyridine, chlorosulfonated polyethylene, latex, polyester resin, acrylic resin, phenol resin, epoxy resin, polyvinyl alcohol resin, acrylate-based resin, or combinations thereof.

The content of the binder may be 1.5 to 3 wt% based on the total weight of the anode mixture layer.

The anode mixture layer may further include a thickener for imparting viscosity along with the binder. A cellulose-based compound may be used as the thickener, and for example, carboxymethyl cellulose, hydroxypropyl methyl cellulose, methyl cellulose, or an alkali metal salt thereof may be mixed and used. As the alkali metal, Na, K or Li may be used. The thickener may be used in an amount of 0.1 parts by weight to 3 parts by weight based on 100 parts by weight of the anode active material.

As described above, an anode mixture slurry may be prepared by mixing an anode active material, a conductive agent, and a binder with a solvent, and the anode mixture slurry may be applied to an anode current collector, dried, and rolled to prepare an anode.

As the solvent, an aqueous solvent, such as water, may be used.

As the anode current collector, at least one selected from the group consisting of copper foil, nickel foil, stainless steel foil, titanium foil, nickel foam, copper foam, a polymer substrate coated with a conductive metal, and combinations thereof may be used. A thickness of the anode current collector is not particularly limited, and may be, for example, 5 to 30 $\mu$m.

The anode provided by an exemplary embodiment in the present disclosure may be manufactured as a multilayer anode using graphite primary particles and graphite secondary particles as anode active materials and distributing a large amount of graphite primary particles in the second anode mixture layer that is a surface side of the anode and distributing a large amount of graphite secondary particles in the first anode mixture layer that is an anode current collector side, so that a collapse of pores on the surface of the anode mixture layer during a rolling process after the anode slurry is applied to the anode current collector and dried, thereby preventing a reduction in porosity, and accordingly, a movement path of lithium ions may be secured, thereby reducing internal resistance of the anode, improving a high-speed charging-discharging rate, and further improving a capacity retention rate.

The anode provided in the present exemplary embodiment has been described as an example of an anode having a two-layer structure disposed on its surface facing the current collector, including a first anode mixture layer on the anode current collector side and a second anode mixture layer on the surface side. Therefore, the anode may have the following structure: anode - second anode mixture layer - first anode mixture layer - anode current collector. However, it is not limited thereto, and one or more additional layers may be included between the first anode mixture layer and the second anode mixture layer, and the anode active material distribution characteristics of these additional layers are not particularly limited.

A secondary battery may be manufactured using the anode as described above. Specifically, a secondary battery may be manufactured by manufacturing an electrode assembly by alternately stacking a cathode and the anode described above with a separator as a boundary, inserting the electrode assembly into a battery case, sealing the battery case, and then injecting an electrolyte solution.

The cathode is not particularly limited, but a cathode may include a cathode mixture layer formed by applying a cathode mixture slurry on at least one surface of a cathode current collector, and performing drying and rolling, and any cathode commonly used in a secondary battery may be suitably used in the present disclosure.

The cathode mixture slurry may include a cathode active material, a binder, and a solvent, and may include a conductive agent and a thickener, if necessary.

As the cathode active material, a compound (lithiated intercalation compound) allowing lithium to be reversibly intercalated and deintercalated may be used. Specifically, at least one of a composite oxide of lithium and a metal selected from cobalt, manganese, nickel, and combinations thereof may be used as the cathode active material.

Specifically, the cathode active material may include a lithium transition metal compound (oxide) having a layered structure, which is represented by the general formula LiMOz, and here, M may include at least one of transition metal elements, such as Ni, Co, and Mn, and other metal elements or non-metal elements. Examples of the composite oxide may include, for example, a monolithic lithium transition metal composite oxide including one transition metal element, a so-called binary lithium transition metal composite oxide including two transition metal elements, and a ternary lithium transition metal composite oxide including Ni, Co, and Mn, which are transition metal elements, as constituent elements, and more specifically, a ternary lithium transition metal composite oxide, such as $Li(Ni_{1/3}Co_{1/3}Mn_{1/3})O_2$.

In addition, a lithium transition metal compound (oxide) represented by the general formula $Li_2MO_3$ may be included wherein M includes at least one of transition metal elements, such as Mn, Fe, and Co, and may further include other metal elements or non-metal elements, for example, $Li_2MnO_3$, $Li_2PtO_3$ and the like.

In addition, the cathode active material may be a solid solution of LiMOz and $Li_2MO_3$, for example, a solid solution represented by $0.5LiNiMnCoO_2$-$0.5Li_2MnO_3$.

Furthermore, a material having a coating layer on a surface of the cathode active material may be used, or a mixture of the compound and a compound having a coating layer may be used. The coating layer may include at least one coating element compound selected from the group consisting of oxides, hydroxides, oxyhydroxides, oxycarbonates, and hydroxycarbonates of coating elements. Compounds constituting these coating layers may be amorphous or crystalline. As the coating element included in the coating layer, Mg, Al, Co, K, Na, Ca, Si, Ti, V, Sn, Ge, Ga, B, As, Zr, or mixtures thereof may be used.

In the cathode, the cathode active material may be 90 to 98 wt% based on a weight of a solid content of a cathode mixture.

The binder serves to bind the cathode active material particles to each other and to bind the cathode active material to the cathode current collector, and the amount of the binder may be 1.5 to 5 wt% based on the solid weight of the cathode mixture. As the binder, for example, polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinyl Pyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like may be used.

The cathode mixture slurry may also include a thickener to impart viscosity along with the binder. The thickener may be the same as the thickener included in the anode mixture slurry, and may be included in an amount of 0.1 to 3 parts by weight based on 100 parts by weight of the cathode active material.

The conductive agent is used to impart conductivity to the cathode, and any electronically conductive material commonly used in the cathode of a secondary battery may be suitably used, and the conductive agent used in the anode mixture may be used. The conductive agent may be used in an amount of 0.1 to 5 wt% based on a solid weight of the cathode mixture.

As the solvent, an aqueous solvent, such as water, as well as a non-aqueous solvent, may be used. A non-aqueous solvent generally used in the preparation of a cathode mixture for a secondary battery may also be used in the present disclosure, and examples thereof may include, but are not limited to, N-methyl-2-pyrrolidone(NMP).

As the cathode current collector, a metal having good conductivity, for example, aluminum, nickel, titanium, or stainless steel, may be used, and may have various shapes, such as a sheet shape, a thin shape, or a mesh shape. A thickness of the cathode current collector is not particularly limited, and may be, for example, 5 to 30 $\mu$m.

As described above, the cathode in which the cathode mixture layer is formed on the cathode current collector may be manufactured by applying the cathode mixture slurry to at least one surface of the cathode current collector and performing drying and rolling.

The separator interposed between the cathode and the anode may be a porous sheet, nonwoven fabric, etc., and may be a multilayer film of two or more layers of polyethylene, polypropylene, or polyvinylidene fluoride, a mixed multilayer film of two layers of polyethylene/polypropylene, a mixed multilayer film of three layers of polyethylene/polypropylene/polyethylene, or a mixed multilayer film of three layers of polypropylene/ polyethylene/polypropylene, and furthermore, a porous heat-resistant layer may be provided on one side or both sides of the porous sheet, nonwoven fabric, or the like. Although the separator is not particularly limited, but, for example, a separator having a thickness of about 10 to 40 $\mu$m may be used.

The electrolyte includes a non-aqueous organic solvent and a lithium salt. The non-aqueous organic solvent serves as a medium through which ions involved in an electrochemical reaction of the battery may move, and may be, for example, a carbonate-based, ester-based, ether-based, ketone-based, alcohol-based, or aprotic solvent, and those commonly used in lithium ion secondary batteries may be used, and the organic solvents may be used alone or in combination.

The lithium salt is dissolved in an organic solvent and acts as a source of lithium ions in the battery to enable basic operation of the lithium ion secondary battery and promotes the movement of lithium ions between the cathode and the anode. For example, one or more selected from the group consisting of $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$(Here, x and y are each independently an integer of 1 to 20), $LiCl$, $LiI$, and $LiB(C_2O_4)_2$ (lithium bis(oxalato) borate (LiBOB)) may be used. A concentration of the lithium salt is not particularly limited, but may be used within the range of 0.1 M to 2.0 M. The electrolyte may further include vinylene carbonate or ethylene carbonate-based compounds as needed to improve battery life.

**Example**

Hereinafter, the present disclosure will be described in more detail with reference to examples. The following examples are intended to explain the present disclosure with specific examples, and are not intended to limit the present disclosure.

**Example 1**

20 wt% of graphite primary particles, 71.5 wt% of graphite secondary particles, and 5 wt% of silicon-based anode active material as anode active materials, 1.0 wt% of carboxymethyl cellulose (CMC) and 2 wt% of styrene butadiene rubber (SBR) as binders, and 0.5 wt% of CNT as a conductive agent were mixed to prepare a first anode mixture slurry.

40 wt% of graphite primary particles, 51.5 wt% of graphite secondary particles as anode active materials, 5 wt% of SiOx (0<x<2) as a silicon-based anode active material, 1.0 wt% of CMC, and 2 wt% of SBR as binders, and 0.5 wt% of CNT as a conductive agent were mixed to prepare a second anode mixture slurry.

The first anode mixture slurry was applied on and below the anode current collector of the Cu foil, and then the second anode mixture slurry was applied to form a coating layer having a total thickness of 200 $\mu$m, and dried by passing through a drying device.

A total composition included in the first anode mixture layer and the second anode mixture layer was 30 wt% of graphite primary particles, 61.5 wt% of graphite secondary particles, 5 wt% of silicon-based anode active material, 1 wt% of CMC, 2 wt% of SBR, and 0.5 wt% of CNT.

Thereafter, by rolling with a rolling roll, an anode having an anode mixture layer having a thickness of 170 $\mu$m was prepared.

**Examples 2 to 4 and Comparative Examples 1 and 2**

An anode was manufactured in the same manner as that of Example 1, except that a first anode mixture slurry and a second anode mixture slurry were prepared by mixing graphite primary particles, graphite secondary particles, a silicon-based active material, CMC and SBR as binders, and CNT as a conductive agent with the contents shown in Table 1.

**Evaluation of Electrode Characteristics**

Electrolyte immersion time, DC-IR, and fast charge cycle capacity retention rates of the anodes prepared in each of the Examples and Comparative Examples were evaluated in the following manner, and the results are shown in Table 1.

**Electrolyte immersion time:** After 1 cc of electrolyte was dropped on the surfaces of the anodes prepared in each of Examples and Comparative Examples, a time required for the electrolyte to be completely immersed into the anode was measured. From this, a difference in porosity of the electrode surface portions may be relatively evaluated.

DC-IR: Batteries were manufactured using the anodes manufactured in each of Examples and Comparative Examples and the same cathode, and resistance values were measured at 50% of state of charge (SOC) using a cell charger and discharger for the manufactured batteries.

**Fast charge cycle capacity retention rate:**

After manufacturing a pouch-type secondary battery (cell) with a large capacity of 20Ah or more using the anodes manufactured in each of Examples and Comparative Examples and the same cathode, fast charge evaluation was conducted in a chamber in which a set constant temperature (25°C) was maintained within a range of DOD72(SOC 8-80) at Step Charge 1C discharge C-rate and at 3C/2.5C/2C/1.5C/1C C-rate.

300 cycles were repeated with rest time of 10 minutes provided between charge and discharge cycles, fast charge capacity retention rate was measured, and results thereof are shown in Table 1 below.

[Table 1]

| | | Anode mixture content by composition (wt%) | | | | | | Electrolyte Immersion time (sec) | DC-IR (mΩ) | Fast Charge cycle capacity retention rate (@300cycle) |
| | | Graphite | | Silicon | Binder | | Conductive agent | | | |
| | | Primary particle | Secondary particle | | CMC | SBR | CNT | | | |
| Comparative Example 1 | Second layer | 30.0 | 61.5 | 5.0 | 1.0 | 2.0 | 0.5 | 75 | 1.24 | 91.4% |
| | First layer | 30.0 | 61.5 | 5.0 | 1.0 | 2.0 | 0.5 | | | |
| Comparative Example 2 | Second layer | 35.0 | 56.5 | 5.0 | 1.0 | 2.0 | 0.5 | 73 | 1.22 | 92.0% |
| | First layer | 25.0 | 66.5 | 5.0 | 1.0 | 2.0 | 0.5 | | | |
| Example 1 | Second layer | 40.0 | 51.5 | 5.0 | 1.0 | 2.0 | 0.5 | 69 | 1.15 | 93.2% |
| | First layer | 20.0 | 71.5 | 5.0 | 1.0 | 2.0 | 0.5 | | | |
| Example 2 | Second layer | 60.0 | 31.5 | 5.0 | 1.0 | 2.0 | 0.5 | 65 | 1.04 | 95.2% |
| | First layer | 0.0 | 91.5 | 5.0 | 1.0 | 2.0 | 0.5 | | | |
| Example 3 | Second layer | 60.0 | 29.5 | 7.0 | 1.0 | 2.0 | 0.5 | 65 | 0.99 | 96.5% |
| | First layer | 0.0 | 93.5 | 3.0 | 1.0 | 2.0 | 0.5 | | | |
| Example 4 | Second layer | 60.0 | 26.5 | 10.0 | 1.0 | 2.0 | 0.5 | 65 | 0.91 | 97.1% |
| | First layer | 0.0 | 96.5 | 0.0 | 1.0 | 2.0 | 0.5 | | | |

(continued)

| | Anode mixture content by composition (wt%) | | | | | | Electrolyte Immersion time (sec) | DC-IR (mΩ) | Fast Charge cycle capacity retention rate (@300cycle) |
|---|---|---|---|---|---|---|---|---|---|
| | Graphite | | Silicon | Binder | | Conductive agent | | | |
| | Primary particle | Second ary particl e | | CMC | SBR | CNT | | | |
| Total composition | 30.0 | 61.5 | 5.0 | 1.0 | 2.0 | 0.5 | - | - | - |

From Table 1, Example 1 and Example 2 are examples of cases in which the content of graphite secondary particles included in the second anode mixture layer was reduced and the content of graphite primary particles was increased, and it can be seen that, compared to Comparative Example 1 in which the contents of graphite primary particles are the same in the first and second anode mixture layers, the electrode electrolyte immersion time was reduced, and accordingly, DC-IR was reduced and fast charging performance was improved.

Meanwhile, Examples 3 and 4 are cases in which more silicon-based anode active material is included in the second anode mixture layer than in the first anode mixture layer, and it can be see that, compared to Examples 1 and 2, DC-IR was significantly reduced, and furthermore, the fast charging performance was further improved.

Meanwhile, Comparative Example 1 used an anode in which the graphite primary particles and the graphite secondary particles are included in the same amount in the first anode mixture layer and the second anode mixture layer, and Comparative Example 2 used an anode in which the content of the graphite primary particles included in the second anode mixture layer was larger and the content of the graphite secondary particles included in the first anode mixture layer was larger, showing that an electrolyte immersion time was longer, compared to Examples, and in addition, the DC-IR and fast charging performance were significantly poor.

Such an improvement in battery characteristics was obtained even though the anode was manufactured under the same conditions, and is evaluated to be able to be obtained by minimizing a reduction in porosity of the surface of the anode current collector during a rolling process by controlling a distribution of the graphite primary particles and the graphite secondary particles, while using graphite primary particles as the anode active material.

As described above, the porosity of the anode may be improved by controlling the distribution of the graphite primary particles and the graphite secondary particles used as the anode active material according to a position of the anode mixture layer in a thickness direction according to each exemplary embodiment in the present disclosure, thereby improving battery performance.

The present disclosure may suppress a reduction of pores on the surface of the anode occurring during the rolling process by improving the distribution characteristics of the anode active material.

Furthermore, as another exemplary embodiment in the present disclosure, the fast charging characteristics may be improved by reducing resistance of the anode during charging and discharging by improving the movement path of lithium ions.

While exemplary embodiments have been shown and described above, it will be apparent to those skilled in the art that modifications and variations could be made without departing from the scope of the present disclosure as defined by the appended claims.

**Claims**

**1.**    An anode for a secondary battery, the anode comprising:

a first anode mixture layer disposed on an anode current collector and a second anode mixture layer disposed on a surface of the anode,
wherein the first and second anode mixture layers include a graphite-based anode active material of graphite secondary particles,
at least the second anode mixture layer includes a graphite-based anode active material of graphite primary particles, and
a content [A2] of graphite primary particles included in the second anode mixture layer is greater than a content [A1] of graphite primary particles included in the first anode mixture layer.

**2.**    The anode of claim 1, wherein

the [A1] and [A2] satisfy Equation 1 below:

$$[A2] \geq 2\,[A1] \qquad \text{(Equation 1)}$$

where $A1 \geq 0$ and $A2 > 0$.

**3.**    The anode of claim 1 or 2, wherein the content of the graphite primary particles included in the first anode mixture layer is 0 wt% or more and 50 wt% or less, and the content of the graphite primary particles included in the second anode mixture layer is 10 wt% or more and 95 wt% or less.

4. The anode of any one claim of claims 1 to 3, wherein the graphite primary particles have a particle diameter of D50 of 3 to 25 μm.

5. The anode of any one of claims 1 to 4, wherein

a content [B1] of graphite secondary particles included in the first anode mixture layer and a content [B2] of graphite secondary particles included in the second anode mixture layer satisfy Equation 2:

$$[B1] > [B2] \qquad \text{(Equation 2)}$$

where B2 > 0.

6. The anode of any one of claims 1 to 5, wherein a content of the graphite secondary particles included in the first anode mixture layer is 20 wt% or more and 97 wt% or less, and a content of the graphite secondary particles included in the second anode mixture layer is 0 wt% or more and 85 wt% or less.

7. The anode of any one of claims 1 to 6, wherein the graphite secondary particles have D50 of 10 to 25 μm.

8. The anode of any one of claims 1 to 7, wherein the anode includes 20 to 75 wt% of graphite primary particles and 20 to 75 wt% of graphite secondary particles based on a total weight of the anode mixture layer.

9. The anode of any one of claims 1 to 8, further comprising a silicon-based anode active material.

10. The anode of any one of claims 1 to 9, wherein the silicon-based anode active material includes 1 to 30 wt% based on a total weight of the anode mixture layer.

11. The anode of any one of claims 1 to 10, wherein

the second anode mixture layer further includes a silicon-based anode active material, and
a content [C1] of the silicon-based anode active material based on a total amount of an anode active material included in the first anode mixture layer and a content [C2] of the silicon-based anode active material based on a total amount of an anode active material included in the second anode mixture layer satisfy Equation 3 below:

$$[C2] \geq 2\,[C1] \qquad \text{(Equation 3)}$$

where $[C1] \geq 0$, and $[C2] > 0$.

12. The anode of any one of claims 1 to 11, wherein the second anode mixture layer has a thickness greater than 20% and less than or equal to 50% of a total thickness of the anode mixture layer.

13. The anode of any one of claims 1 to 12, wherein the first anode mixture layer has a thickness of 50% or more and less than 80% of a total thickness of the anode mixture layer.

14. The anode of any one of claims 1 to 13, wherein the first anode mixture layer and the second anode mixture layer have a thickness ratio of 5 to 8:2 to 5.

15. A secondary battery comprising:

an electrode assembly in which the anode of any one of claims 1 to 14 and a cathode including a cathode mixture layer on at least one surface of a cathode current collector are alternately laminated with a separator as a boundary; and
a battery case in which the electrode assembly is accommodated and sealed.

Europäisches
Patentamt

European
Patent Office

Office européen
des brevets

# EUROPEAN SEARCH REPORT

Application Number

EP 23 15 7468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/217587 A1 (CONTEMPORARY AMPEREX TECHNOLOGY CO LTD [CN]) 4 November 2021 (2021-11-04) * examples 1-7 * | 1-15 | INV. H01M4/133 H01M4/134 H01M4/1393 H01M4/1395 |
| A | KR 2022 0007260 A (LG ENERGY SOLUTION LTD [KR]) 18 January 2022 (2022-01-18) * paragraphs [0001], [0043] * | 1-15 | H01M4/36 H01M4/583 H01M10/0525 H01M4/587 |
| A | EP 3 944 373 A1 (JACOBIO PHARMACEUTICALS CO LTD [CN]) 26 January 2022 (2022-01-26) * tables 1,2 * | 1-15 | ADD. H01M4/02 |

**TECHNICAL FIELDS SEARCHED (IPC)**

H01M

The present search report has been drawn up for all claims

| Place of search | Date of completion of the search | Examiner |
|---|---|---|
| Munich | 3 July 2023 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 7468

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2023

| Patent document cited in search report | | Publication date | Patent family member(s) | | Publication date |
|---|---|---|---|---|---|
| WO 2021217587 | A1 | 04-11-2021 | CN | 113875051 A | 31-12-2021 |
| | | | EP | 3961769 A1 | 02-03-2022 |
| | | | JP | 2023503699 A | 31-01-2023 |
| | | | KR | 20220095221 A | 06-07-2022 |
| | | | US | 2022123287 A1 | 21-04-2022 |
| | | | WO | 2021217587 A1 | 04-11-2021 |
| KR 20220007260 | A | 18-01-2022 | CN | 114430865 A | 03-05-2022 |
| | | | EP | 4020623 A1 | 29-06-2022 |
| | | | JP | 2022549673 A | 28-11-2022 |
| | | | KR | 20220007260 A | 18-01-2022 |
| | | | US | 2022336809 A1 | 20-10-2022 |
| | | | WO | 2022010121 A1 | 13-01-2022 |
| EP 3944373 | A1 | 26-01-2022 | CN | 113875050 A | 31-12-2021 |
| | | | EP | 3944373 A1 | 26-01-2022 |
| | | | JP | 7179196 B2 | 28-11-2022 |
| | | | JP | 2022527147 A | 31-05-2022 |
| | | | KR | 20210134925 A | 11-11-2021 |
| | | | US | 2022123306 A1 | 21-04-2022 |
| | | | WO | 2021217635 A1 | 04-11-2021 |

EPO FORM P0459

For more details about this annex : see Official Journal of the European Patent Office, No. 12/82